# EUROPEAN PATENT APPLICATION

(11) **EP 4 254 624 A1**
(43) Date of publication of application: **04.10.2023**
(21) Application number: 22778350.3
(22) Date of filing: 27.01.2022
(51) Int. Cl.: H01M 50/204, H01M 10/04

(54) **BATTERY AND ELECTRONIC APPARATUS USING SAID BATTERY**

(30) Priority: 30.03.2021 CN 202110340406
(71) Applicant: BYD Company Limited, Guangdong 518118 (CN)
(72) Inventor: HUANG, Liangliang, Shenzhen, Guangdong Province Guangdong 518118 (CN); WANG, Feng, Shenzhen, Guangdong Province Guangdong 518118 (CN); WANG, Jingguo, Shenzhen, Guangdong Province Guangdong 518118 (CN); ZHU, Shuang, Shenzhen, Guangdong Province Guangdong 518118 (CN); LEI, Yudong, Shenzhen, Guangdong Province Guangdong 518118 (CN)
(74) Representative: DehnsGermany Partnerschaft von Patentanwälten
(86) International application number: PCT/CN2022/074404
(87) International publication number: WO 2022/206162

(57) **Abstract**

The present disclosure discloses a battery and an electronic device using same. The electronic device includes an enclosure having an accommodating space formed therein, multiple functional devices, and a battery. The multiple functional devices occupy part of the accommodating space, and the battery substantially occupies the rest of the accommodating space. The battery includes multiple electrode assemblies, a housing, and a flexible circuit. The housing accommodates the multiple electrode assemblies. The flexible circuit is integrally formed with the housing and is laid based on a predetermined serial/parallel relationship of the multiple electrode assemblies and a position of a lead-out portion. The electrode assembly and the corresponding functional device form a mutual avoidance and complementary relationship in space occupation, so as to realize full utilization of the accommodating space.

## Description

The present disclosure claims priority to Chinese Patent Application No. 202110340406.4, filed on March 30, 2021 and entitled "BATTERY AND ELECTRONIC DEVICE USING SAME". The entire content of the above-referenced application is incorporated herein by reference.

### FIELD

The present disclosure relates to the field of batteries, and more specifically, to a battery and an electronic device using same.

### BACKGROUND

Electronic devices, such as laptops, tablets, and mobile phones, are increasingly designed to be thin and light due to aesthetic and portability requirements. Generally, an overall dimension and an arrangement of a functional component inside the electronic device vary, but a battery, as a key component, is substantially mounted in the same manner. That is to say, a separate battery compartment needs to be arranged in advance for the battery, and the battery and battery compartment are basically regular shapes. In order to avoid other functional components, use of part of the space needs to be given up, which is not conducive to the thinness and lightness of the electronic device. Meanwhile, the battery usually includes multiple cells. In order to meet requirements such as outputting a voltage, outputting a current, sampling, and control, multiple connecting lines are necessarily to be arranged, which are complex in structure and occupy more space.

### SUMMARY

Based on the above, the present disclosure discloses a battery and an electronic device using same, which is intended to provide a battery structure that can simplify a battery structure and improve a space utilization rate inside the electronic device and help realize thinness and lightness of the electronic device.

The solutions are as follows.

A battery, applicable to an electronic device, where the electronic device includes an enclosure having an accommodating space formed therein and multiple functional devices, the multiple functional devices are accommodated in the enclosure and occupy part of the accommodating space of the enclosure, and the battery includes:
multiple electrode assemblies, respectively arranged in a predetermined size specification and arranged at predetermined positions to substantially occupy the rest of the accommodating space, where each of the predetermined positions of the electrode assemblies is provided with a lead-out portion;
a housing, where a predetermined position of the housing protrudes outward and multiple accommodating grooves are correspondingly formed inside, and the multiple accommodating grooves match the overall dimensions of the multiple electrode assemblies to correspondingly accommodate the multiple electrode assemblies; and
a flexible circuit, integrally formed with the housing and laid based on a predetermined serial/parallel relationship of the multiple electrode assemblies and a position of the lead-out portion, where the flexible circuit includes an output terminal and multiple connecting portions, the multiple connecting portions are configured to be connected with the corresponding lead-out portions to electrically connect the multiple electrode assemblies; and the output terminal extends out of the housing for leading out power.

In a preferred implementation, the flexible circuit further includes a wire portion, and the wire portion is integrally formed on an inner side of the housing; and
the multiple connecting portions and the output terminal are arranged on the wire portion, and the connecting portions protrude from an inner side of the enclosure and extend to the corresponding lead-out portions.

In a preferred implementation, the housing includes:
a first enclosure, substantially located on a same plane; and
a second enclosure, arranged opposite to the first enclosure and defining the accommodating space together with the first enclosure, where the predetermined position of the second enclosure is recessed away from the first enclosure to form the multiple accommodating grooves; and
the flexible circuit is attached to an inner wall of the first enclosure.

In a preferred implementation, the housing includes:
a first enclosure, substantially located on a same plane; and
a second enclosure, arranged opposite to the first enclosure and defining the accommodating space together with the first enclosure, where the predetermined position of the second enclosure is recessed away from the first enclosure to form the multiple accommodating grooves; and
the flexible circuit is attached to an inner wall of the second enclosure and arranged in a non-drawing area of the second enclosure.

In a preferred implementation, the flexible circuit includes:
a flexible circuit layer, attached to an inner wall of the housing and including the wire portion, the connecting portion, and the output terminal; and
an insulating layer, covering an outer side of the flexible circuit layer and exposing the connecting portion and the output terminal.

In a preferred implementation, the flexible circuit layer includes multiple wire sections, the multiple wire sections are predetermined based on the predetermined serial/parallel relationship and positions of the lead-out portion and the output terminal;
at least one of the connecting portion and the output terminal is integrally preformed with one of the wire sections; and
the insulating layer covers the multiple wire sections.

In a preferred implementation, the insulating layer is formed by coating an insulating material on a surface of the wire section.

In a preferred implementation, each of the electrode assemblies includes multiple positive plates, multiple separators, and multiple negative plates that are arranged in a stack, each of the positive plates is provided with a positive tab, each of the negative plates is provided with a negative tab;
multiple positive tabs of each electrode assembly are connected together to form a positive lead-out portion, multiple negative tabs are connected together to form a negative lead-out portion; and
the connecting portion protrudes from the wire section and extends to a position docked with the corresponding positive lead-out portion or the negative lead-out portion.

In a preferred implementation, the insulating layer is an insulating film; and the insulating film is attached to the outer side of the flexible circuit layer and engaged with the housing.

The present disclosure further discloses an electronic device, including:
an enclosure, having an accommodating space formed therein; and
multiple functional devices, mounted to the enclosure and occupying part of the accommodating space, where
the electronic device further includes the battery; and
the battery substantially occupies the rest of the accommodating space.

In the battery and the electronic device using same, the functional device of the electronic device and the shape of the battery engage with each other, the electrode assembly and the corresponding functional device form a mutual avoidance and complementary relationship in occupation of the space, so as to make full use of the accommodating space. In addition, the flexible circuit is integrally formed on the inner side of the enclosure by using convenient features of forming and laying, which can simplify the circuit design of the battery. In this way, the utilization rate of the internal space of the electronic device can be improved, and the lightness and thinness of the electronic device can be easily realized.

### BRIEF DESCRIPTION OF THE DRAWINGS

The above-mentioned and other objects and advantages of the present disclosure are described in detail below in conjunction with the accompanying drawings.
FIG. 1 is a schematic exploded structural view of an electronic device according to a preferred embodiment.
FIG. 2 is a schematic structural diagram of a battery in an electronic device according to a preferred embodiment.
FIG. 3 is a schematic structural diagram of an electrode assembly and a flexible circuit in the battery shown in FIG. 2 according to an embodiment.
FIG. 4 is a schematic structural diagram of an electrode assembly and a flexible circuit in the battery shown in FIG. 2 according to another embodiment.
FIG. 5 is a schematic diagram of distribution of an electrode assembly in the battery shown in FIG. 2.
FIG. 6 is a schematic diagram of distribution of a flexible circuit in the battery shown in FIG. 2.
FIG. 7 is a schematic diagram of connection between an electrode assembly and a connecting line in the battery shown in FIG. 2.
FIG. 8 is a schematic structural diagram of the electrode assembly shown in FIG. 4 and a first enclosure according to an embodiment.
FIG. 9 is a schematic structural diagram of an electrode assembly in the battery shown in FIG. 2.
FIG. 10 is a schematic diagram of a connection structure between the electrode assembly shown in FIG. 9 and a wire portion.

### REFERENCE NUMERALS

10. Enclosure
20. Battery
30. Functional device
100. Electronic device
210. Housing
220. Electrode assembly
221. Positive plate
222. Separator
223. Negative plate
230. Flexible circuit
2110. First enclosure
2120. Second enclosure
2121. Accommodating groove
2122. Non-drawing area
2201. Lead-out portion
2211. Positive tab
2231. Negative tab
2210. First electrode assembly
2220. Second electrode assembly
2230. Third electrode assembly
2240. Fourth electrode assembly
2250. Fifth electrode assembly
2301. Wire portion
2302. Connecting portion
2303. Output terminal
2304. Insulating layer
2310. First wire section
2320. Second wire section
2330. Third wire section
2340. Fourth wire section

### DETAILED DESCRIPTION

The embodiments of the present invention are described in detail below, and the embodiments described with reference to accompanying drawings are exemplary.

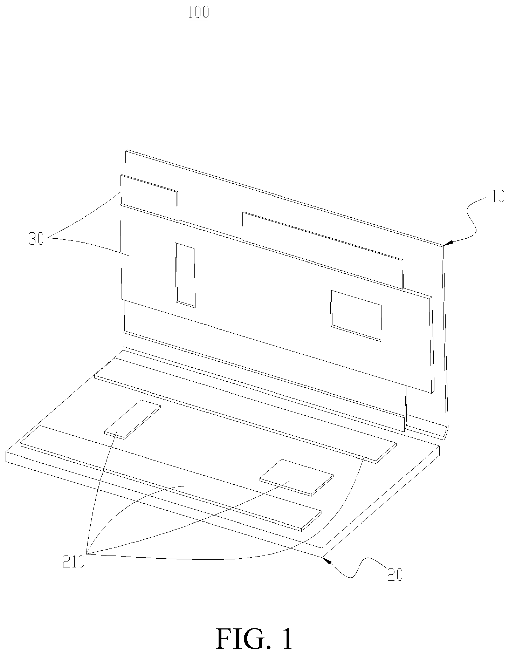

As shown in FIG. 1, the electronic device 100 includes an enclosure 10, a battery 20, and a functional device 30. The enclosure 10 is formed with accommodating space, which is configured to accommodate the battery 20 and the functional device 30.

The functional device 30 is mounted to the enclosure 10 and occupies part of the accommodating space. The battery 20 substantially occupies remaining space of the accommodating space.

For example, in some application scenarios, the electronic device 100 may be a portable device such as a notebook computer and a tablet computer, or may be other smart electronic products, such as a mobile phone and a wearable device. Taking the electronic device 100 as the notebook computer as an example, the enclosure 10 corresponds to a housing of a host part of the notebook computer, and the functional device 30 mainly include a main board, a CPU, a hard disk, a memory, a graphics card, a sound card, a heat sink, and the like. The battery 30 is a power supply battery for the notebook computer.

In a practical application, after the CPU, the hard disk, the memory, the graphics card, the sound card, and the heat sink are mounted to one side of the main board, a side facing internal accommodating space of the housing occupies part of the accommodating space. Besides, specifications of the functional device are diversified, and overall dimensions are different. After the assembly is completed, the remaining accommodating space is irregular and uneven in shape due to an influence of concave and convexity of the functional devices and a spacing of an arrangement between the functional devices.

Generally, the enclosure 10 may be provided with an independent battery compartment, and the battery compartment is arranged in a regular shape to facilitate design and processing. The battery compartment needs to avoid the functional device 30 as a whole, resulting in unavailability of a number of irregular spaces.

Based on the above, in the electronic device 100 disclosed in the present application, the functional device 30 is mounted to the enclosure 10 and occupies part of the accommodating space, and the battery 20 substantially occupies remaining space of the accommodating space. It should be noted that the "substantially" here means that the foregoing remaining space cannot be strictly occupied due to a factor such as a machining accuracy limitation, an assembly requirement, and an electrical safety requirement. Therefore, the battery 20 can generally occupy the rest of the accommodating space, and can reflect that the battery 20 and the functional device 30 avoid each other and complement each other in volume to use a volume of the accommodating space as much as possible.

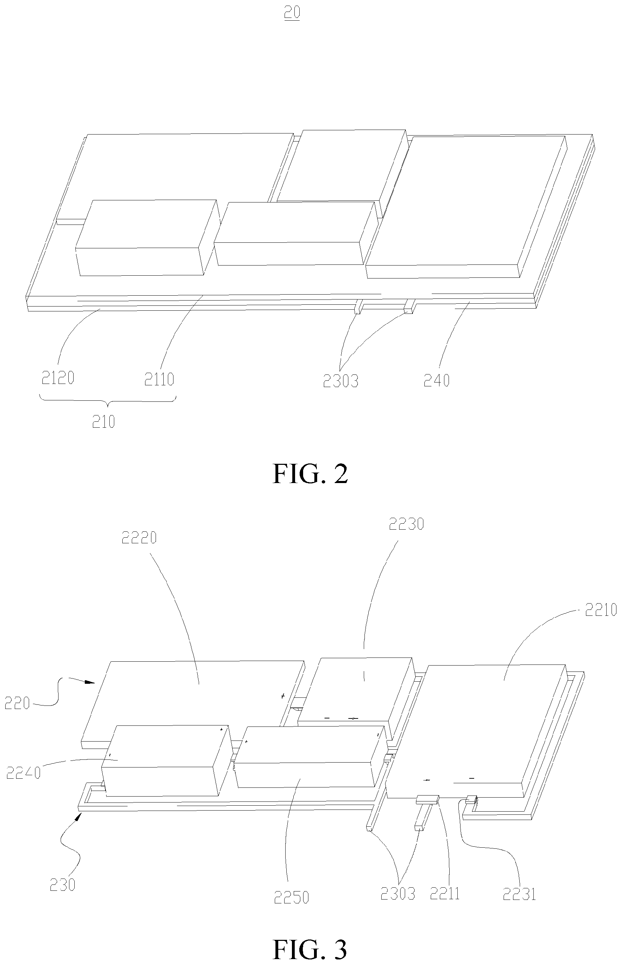

In addition, as shown in FIG. 2 to FIG. 4, in order to achieve the above object, the battery 20 disclosed in the embodiment of the present disclosure includes a housing 210, multiple electrode assemblies 220, and a flexible circuit 230.

The multiple electrode assemblies 220 have predetermined overall dimensions and are arranged according to predetermined positions respectively. In a specific implementation, the electronic device 100 needs to implement a specific function, and the functional device 30 may be arranged in the enclosure 10 prior to the battery 20. Correspondingly, the shape and distribution of the remaining space within the enclosure 10 are also substantially determined. In this way, overall dimensions and positions of the multiple electrode assemblies 220 can be divided in advance according to the shape and distribution of the remaining space. Meanwhile, in order to meet the demand that the battery 20 can output power to the outside, the series and/or parallel relationship between the multiple electrode assemblies 220 can be preset to set an output current, voltage, and the like.

At least two of the electrode assemblies 220 have different heights, which can be set according to the volume occupation of the functional device 30. In this way, each of the electrode assemblies 220 may be arranged in a mutual avoidance relationship with the multiple functional devices 30 in height. That is to say, when the battery 20 is placed in the accommodating space, the functional device 30 of the electronic device 100 occupies part of the accommodating space. For the battery 20, the overall dimension and the position arrangement of the electrode assemblies 220 is preset according to the arrangement of the functional device 30, and the electrode assemblies 220 is set to a height that matches the corresponding position of the functional device 30. For example, at a predetermined position, the height of the electrode assembly 220 provided corresponding thereto is correspondingly set lower when the height of the functional device 30 is higher, and the height of the electrode assembly 220 provided corresponding thereto is correspondingly set higher when the height of the functional device 30 is lower. As a result, the battery 20 substantially occupies the rest of the accommodating space, and realizes the full utilization of the accommodating space.

During specific implementation, a shape of the electrode assembly 220 may be a regular shape, so as to be formed by a winding process. For example, in order to reduce the difficulty of processing, the electrode assembly 220 may be substantially constructed as a rectangular shape. It should be understood that the electrode assembly 220 can may be set to an irregular shape, that is, a special-shaped shape, such as a diamond, a fan, and a trapezoid. In this context, the electrode assembly 220 may be molded in a laminated manner. In a practical application, the shape of the electrode assembly 220 can be set according to a setting requirement of the accommodating space.

The predetermined position of the electrode assembly 220 is provided with a lead-out portion 2201, so as to realize the series and parallel connection between the multiple electrode assemblies 220.

The predetermined position of the housing 210 protrudes outward, and multiple accommodating grooves 2121 are correspondingly formed inside the housing 210. The multiple accommodating grooves 2121 match the multiple electrode assemblies 220 in the overall dimensions, so as to correspondingly accommodate the multiple electrode assemblies 220.

The flexible circuit 230 is integrally formed with the housing 210 and laid based on a predetermined serial/parallel relationship of the multiple electrode assemblies 220 and a position of the lead-out portion 2201. The flexible circuit 230 includes an output terminal 2303 and multiple connecting portions 2302. The multiple connecting portions 2302 are configured to be connected to the corresponding lead-out portions 2201 to electrically connect the multiple electrode assemblies 220. The output terminal 2303 extends out of the housing 210 for leading out power.

That the flexible circuit 230 forms an integral structure with the housing 210 may be understood as a main part of the flexible circuit 230 is integrally fixed with the inner side of the housing 210 by processes such as bonding, inlay, welding, and cladding, and the output terminal 2303 and the connecting portion 2302 of the flexible circuit 230 may protrude from the inner side of the housing 210, so as to realize the electrical connection with the multiple electrode assemblies 220 through the connecting portion 2302, and realize the electrical lead-out of the battery 20 through the output terminal 2303.

For example, in a preferred implementation, the flexible circuit 230 includes a wire portion 2301, the connecting portion 2302, and the output terminal 2303. The wire portion 2301 is integrally formed on the inner side of the housing 210. The multiple connecting portions 2302 and the output terminal 2303 are arranged on the wire portion 2301, and each of the connecting portions 2302 protrudes from the inner side of the housing 210 and extends to the corresponding lead-out portion 2201.

As described above, after the multiple electrode assemblies 220 are arranged at the predetermined position, in order to meet the demand that the battery 20 can output power to the outside, the series and/or parallel relationship between the multiple electrode assemblies 220 can be preset to set an output current, voltage, and the like. If a common circuit with a coating film is used to complete the connection of the multiple electrode assemblies 220, the non-foldability of the common circuit weakens the safety performance of the battery. Besides, an overall layout is messy and complicated if the circuit is directly connected inside the battery. Therefore, the present disclosure solves a risk caused by the non-foldability of the common circuit by using the flexible circuit that can be freely bent, wound, and folded. By designing the serial/parallel relationship between the electrode assemblies 220 in advance in the flexible circuit, positive and negative electrode connecting terminals connected with each electrode assembly 220 on the flexible circuit 230 are drawn to the electrode assembly 220 at the corresponding position, and are connected with positive and negative electrode pins drawn from the electrode assembly 220 at the corresponding position to realize series or parallel connection between the multiple electrode assemblies 220.

In another preferred implementation, the housing 210 includes a first enclosure 2110 and a second enclosure 2120.

The first enclosure 2110 is substantially located in a same plane. In other words, the first enclosure 2110 is substantially a flat plate-like structure. The second enclosure 2120 is arranged opposite to the first enclosure 2110 and defining the accommodating space together with the first enclosure 2110. The second enclosure 2120 is recessed at a predetermined position away from the first enclosure 2110 to form the multiple accommodating grooves 2121.

In a practical application, the housing 210 may be an aluminum-plastic film, and the first enclosure 2110 is a relatively flat side of the aluminum-plastic film. The second enclosure 2120 can be drawn deep to form the accommodating groove 2121 that is recessed at the predetermined position.

During specific implementation, according to the predetermined overall dimensions and the predetermined position arrangement of the multiple electrode assemblies 220, the aluminum-plastic film can be scoured to a different depth based on a specific position. While the flexible circuit 230 cannot be stamped, so the flexible circuit 230 needs to be designed to a bottom plane film of the aluminum-plastic film without punching, and the connecting portion 2302 corresponding to the position of each electrode assembly 220 is reserved. Then, the positive/negative lead-out portions 2201 at each position of the electrode assembly 230 are electrically connected with the corresponding connecting portions 2302 of the flexible circuit 230, respectively. The connecting portion 2302 of the electrode assembly 220 is usually formed by centralized spot welding of the tab of each electrode plate. The lead-out portion 2201 and the connecting portion 2302 may be electrically connected by spot welding or riveting to complete the serial/parallel connection between the electrode assemblies 220 inside the battery 20.

The flexible circuit 230 may form an integral structure with the first enclosure 2110, or may form an integral structure with the second enclosure 2120.

For example, the flexible circuit 230 may be attached to the inner wall of the first enclosure 2110. In another implementation, the flexible circuit 230 may be attached to the inner wall of the second enclosure 2120. Since the flexible circuit 230 cannot be scoured and drawn, the flexible circuit needs to be distributed in a non-drawing area 2122 of the second enclosure 2120.

The flexible circuit 230 includes a flexible circuit layer and an insulating layer 2304. The flexible circuit layer is attached to the inner wall of the housing 210. During specific implementation, the flexible circuit layer may include a wire portion 2301, the connecting portion 2302, and the output terminal 2303.

Taking the flexible circuit 230 forms an integral structure with the first enclosure 2110 as an example, during specific implementation, the positive/negative lead-out portions 2201 at each position of the electrode assembly 230 may alternatively be arranged close to an inner surface of the first enclosure 2110. After the flexible circuit layer is attached to an inner wall of the first enclosure 2110, the connecting portion 2302 may be bent by the inner wall of the first enclosure 2110 and extend to the positive/negative lead-out portion 2201 at the corresponding position of the electrode assembly 230. The insulating layer 2304 is coated on the outer side of the flexible circuit layer and exposes the connecting portion 2302 and the output terminal 2303. In this way, the insulating layer 2304 isolates a side of the flexible circuit layer close to the electrode assembly 220, plays an insulating protection role, and at the same time prevents an electrolyte in the later battery from corroding the line.

In a preferred implementation, the flexible circuit layer includes multiple wire sections, and the multiple wire sections are predetermined based on the predetermined serial/parallel relationship and positions of the lead-out portion 2201 and the output terminal 2303. At least one of the connecting portion 2302 and the output terminal 2303 is integrally preformed with one of the wire sections.

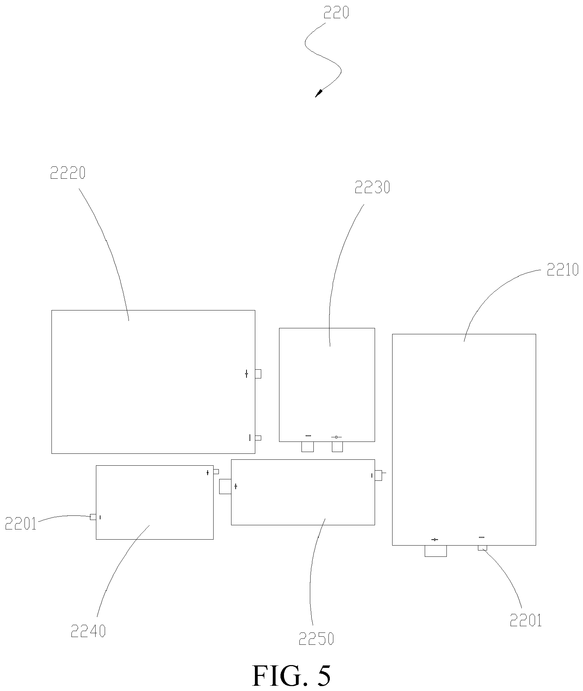

As an example, as shown in FIG. 5 to FIG. 10, in a specific embodiment, the battery 20 includes five electrode assemblies 220, which are specifically referred to as a first electrode assembly 2210, a second electrode assembly 2220, a third electrode assembly 2230, a fourth electrode assembly 2240, and a fifth electrode assembly 2250. These electrode assemblies 220 are rectangular in shape, and each electrode assembly has three dimensions: length, width, and height. The width and length are respectively the dimensions of the electrode assembly in two directions perpendicular to the height direction. As described above, at least two of the five electrode assemblies 220 have different heights. During specific implementation, the functional devices 30 in the electronic device 100 have different specifications, therefore, the five electrode assemblies 220 have different heights generally, and at least two electrode assemblies 220 have different widths, and/or at least two electrode assemblies 220 have different lengths among the five electrode assemblies 220. In this example, the length, width, and height of the first electrode assembly to the fifth electrode assembly are different from each other. The implementation may be set according to a specific requirement.

The first electrode assembly 2210, the second electrode assembly 2220, the third electrode assembly 2230, the fourth electrode assembly 2240, and the fifth electrode assembly 2250 are arranged in a predetermined form, and a spacing is defined between the adjacent electrode assemblies. The lead-out portion 2201 of each fifth electrode assembly 220 needs to be connected with the flexible circuit 230, and is arranged toward the spacing accordingly. As shown in FIG. 3, the positive lead-out portion and the negative lead-out portion of the second electrode assembly 2220 are arranged in a spacing between the second electrode assembly 2220 and the third electrode assembly 2230. The positive lead-out portion and the negative lead-out portion of the second electrode assembly 2220 are arranged in a spacing between the second electrode assembly 2220 and the third electrode assembly 2230. The positive lead-out portion and the negative lead-out portion of the third electrode assembly 2230 are arranged in a spacing between the third electrode assembly 2230 and the fifth electrode assembly 2250. The positive lead-out portion of the fourth electrode assembly 2240 and the fifth electrode assembly 2250 are arranged in a spacing between the fourth electrode assembly 2240 and the fifth electrode assembly 2250. The negative lead-out portion of the fifth electrode assembly 2250 is arranged in a spacing between the fifth electrode assembly 2250 and the first electrode assembly 2210. The positive lead-out portion of the first electrode assembly 2210, the negative lead-out portion, and the negative lead-out portion of the fourth electrode assembly 2240 are arranged toward an outer peripheral side of the respective electrode assemblies.

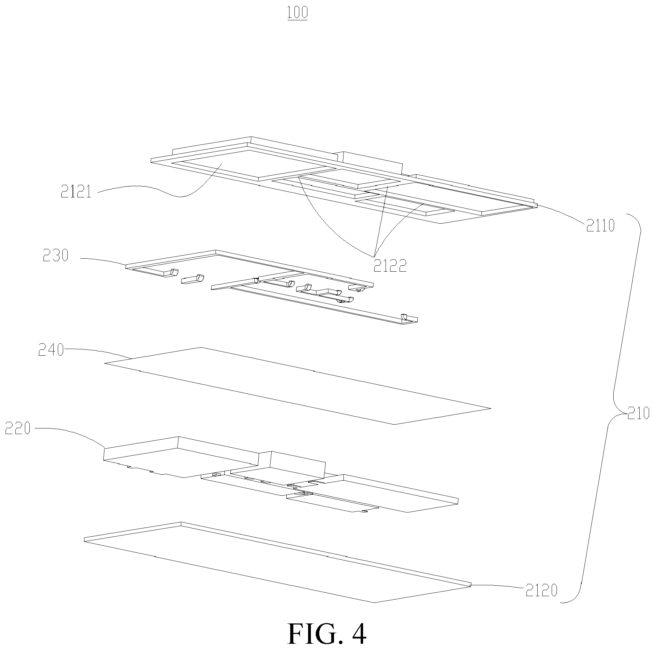

Accordingly, in order to achieve a predetermined series-parallel relationship between the first electrode assembly to the fifth electrode assembly, multiple wire sections are arranged on the wire portion 2301 of the flexible circuit 230. For example, as shown in FIG. 4, when it is necessary to realize that the first electrode assembly 2210 is connected in series with the second electrode assembly 2220 and the third electrode assembly 2230 after being connected in parallel, and then connected in series with the fourth electrode assembly 2240 and the fifth electrode assembly 2250, the wire portion 2301 can be arranged into four sections, that is, a first wire section 2310, a second wire section 2320, a third wire section 2330, and a fourth wire section 2340.

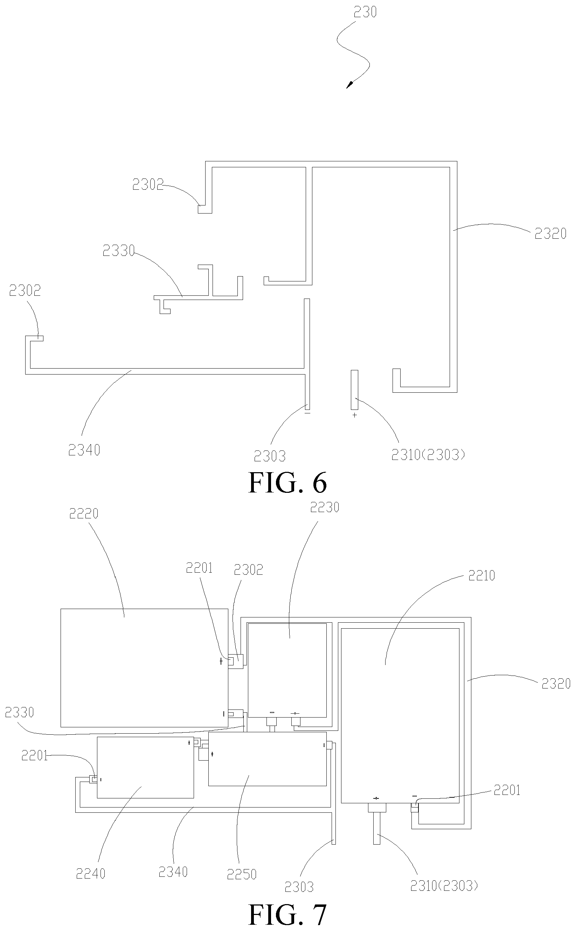

As shown in FIG. 7, the first wire section 2310 is connected with the positive lead-out portion of the first electrode assembly 2210, and is multiplexed as the positive electrode output terminal of the battery 20.

One end of the second wire section 2320 is connected with the negative lead-out portion of the first electrode assembly 2210, and the other end separates two connecting portions 2302, which are respectively connected with the positive lead-out portions of the second electrode assembly 2220 and the third electrode assembly 2230.

Both ends of the third wire section 2330 are each divided into two connecting portions 2302. The two connecting portions 2302 at one end are respectively connected with the negative lead-out portion of the second electrode assembly 2220 and the negative lead-out portion of the fifth electrode assembly 2250, the two connecting portions 2302 at the other end are respectively connected with the positive lead-out portion of the fourth electrode assembly 2240 and the positive lead-out portion of the fifth electrode assembly 2250.

One end of the fourth wire section 2340 is divided into two connecting portions 2320, which are respectively connected with the negative lead-out portion of the fourth electrode assembly 2240 and the negative lead-out portion of the fifth electrode assembly 2250, the other end is multiplexed as the negative output terminal of the battery 20.

Through the arrangement and the connection of the wire section, the first electrode assembly 2210, the second electrode assembly 2220 and the third electrode assembly 2230 after being connected in parallel, and the series connection of the fourth electrode assembly 2240 and the fifth electrode assembly 2250 after being connected in parallel can be realized, and the positive output and the negative output of the battery 20 may be realized at the same time.

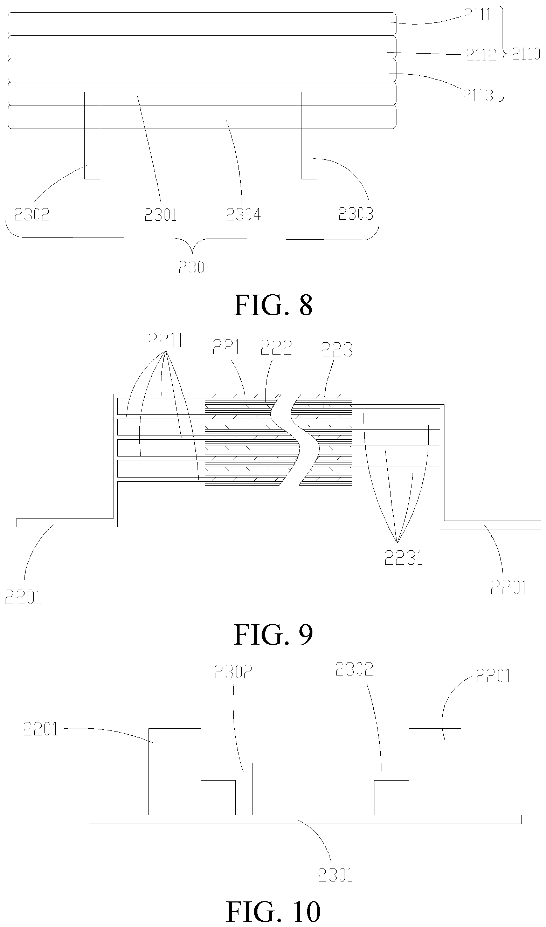

The insulating layer 2304 covers the multiple wire sections. For example, in a preferred implementation, the insulating layer 2304 is formed by coating an insulating material on a surface of the wire section. In another preferred implementation, the insulating layer 2304 is an insulating film, and the insulating film is attached to an outer side of the flexible circuit layer 2312 and combined with the housing 210. During specific implementation, as shown in FIG. 8 to FIG. 10, the housing 210 may be an aluminum-plastic film, and the flexible circuit layer and the insulating layer 2304 may alternatively be designed into the aluminum-plastic film in advance. The tab is extracted by embedding a flexible circuit layer and an insulating layer 2304 with corrosion resistance and insulation in advance in an original nylon layer 2111, an Al layer 2112, and a PP layer 2113 of the aluminum-plastic film, and drawing the positive and negative tabs are through the positive and negative tab pins.

The electrode assembly 220 is the electrode core, and includes a positive plate 221, a separator 222, and a negative plate 223. For example, in a preferred implementation, the electrode assembly 220 includes multiple includes multiple positive plates 221, multiple separators 222, and multiple negative plates 223 that are arranged in a stack. A positive tab 2211 is arranged on the positive plate 221, and a negative tab 2231 is arranged on the negative plate 223.

The multiple positive tabs 2211 of each electrode assembly 220 are connected together to form a positive lead-out portion, and the multiple negative tabs 2231 are connected together to form a negative lead-out portion.

The connecting portion 2302 protrudes from the flexible circuit 230 and extends to a position docked with the corresponding positive lead-out portion or the negative lead-out portion, so as to form an electrical connection with the corresponding positive lead-out portion or the negative lead-out portion.

In the battery 20 and the electronic device 100 using the battery 20, the functional device 30 of the electronic device 100 and the shape of the battery 20 engage with each other, the electrode assembly 220 and the corresponding functional device 30 form a mutual avoidance and complementary relationship in occupation of the space, so as to make full use of the accommodating space. In addition, the flexible circuit 230 is integrally formed on the inner side of the enclosure 210 due to the convenient molding and layout, so that the circuit design of the battery 20 can be simplified, and the design and layout of the battery 20 can be simplified. In this way, the utilization rate of the internal space of the electronic device 100 can be improved, and the thinness and lightness of the electronic device 100 can be easily realized.

The flexible circuit 230 is accommodated in the housing and laid based on a predetermined serial/parallel relationship of the multiple electrode assemblies 220 and a position of the lead-out portion 2201 to electrically connect the multiple electrode assemblies. Wires are arranged in the housing 210 of the battery 20, and the electrical connection of the electrode assembly 220 is realized. The output terminal extends out of the housing for electrical lead-out, which can simplify an external circuit and reduce occupation of an internal space of the electronic device 100 by an external circuit and a component.

In a preferred implementation, the flexible circuit further includes a wire portion 2301 and multiple connecting portions 2302 arranged on the wire portion 2301. The wire portion 2301 is laid on a circumferential side of the electrode assembly 220 based on the predetermined serial/parallel relationship of the multiple electrode assemblies 220 and the position of the lead-out portion 2201. The multiple connecting portions 2302 are arranged on the wire portion 2301 and electrically connected with the lead-out portion 2201 at a corresponding position. The output terminal 2303 is arranged on the wire portion 2301.

During specific implementation, the electrode assembly 220 may be made by winding a positive plate, a separator, and a negative plate. A tab is reserved on the positive plate and the negative plate. Accordingly, the lead-out portion 2201 may correspondingly include a positive lead-out portion and a negative lead-out portion that are formed after the winding by respectively soldering the positive tabs together and soldering the negative tabs together. The lead-out portion 2201 may be arranged on a side surface of the electrode assembly 220, and the lead-out portion 2201 of the multiple electrode assemblies 220 may be substantially arranged on a same plane, to facilitate arrangement of the flexible circuit 230.

The wire portion 2301 may include multiple wire sections predetermined based on the predetermined serial/parallel relationship and the position of the lead-out portion. Since the multiple electrode assemblies 220 are different in size and specification to meet the requirements of space occupation, in order to meet the requirement for output power, the electrode cores need to be connected according to the predetermined series and parallel relationship. The wire portion 2301 is preset as multiple wire sections, which can more conveniently complete the predetermined serial/parallel connection, especially the series connection, according to the arrangement of the electrode assembly 220.

To facilitate processing and molding, and to simplify the connection step, at least one of the connecting portion 2302 and the output terminal 2303 may be integrally preformed with one of the wire sections. During specific implementation, the connecting portion 2302 can be integrally formed with the corresponding wire section, and the connecting portion 2302 is located at a terminal of the corresponding wire section. The output terminal 2303 includes a positive output terminal and a negative output terminal, one of which is integrally formed with a wire section, and the other may be formed by a wire section. An outer side of the wire portion is covered with an insulating film 240, to achieve an electrical insulation protection. Apart of the connecting portion 2302 and the output terminal 2303 are exposed to facilitate electrical connection.

A spacing may be defined between adjacent electrode assemblies 220 as setting the arrangement of the multiple electrode assemblies 220. The lead-out portion 2201 of each fifth electrode assembly 220 needs to be connected with the flexible circuit 230, and is arranged toward the spacing accordingly. A part of the wire portion 2301 located between adjacent electrode assemblies 220 is embedded in a corresponding spacing. In this arrangement, the electrical connection between the flexible circuit 230 and the lead-out portion 2201 of the electrode assembly 220 is facilitated. Besides, the lead-out portion 2201 of the electrode assembly 220 needs to occupy part of the space, therefore, the wire portion 2301 of the flexible circuit 230 is embedded in the spacing that needs to be reserved, which is equivalent to multiplexing this part of the space. As a result, the space utilization rate is improved and the wiring is facilitated.

During specific implementation, the housing 210 may include a first enclosure 2110 and a second enclosure 2120.

The first enclosure 2110 is substantially located in the same plane, that is, the first enclosure 2110 is substantially a flat film, forming a flat side of the housing 210. During specific implementation, the "substantially" here can be used for a tolerance and an error caused by an impact of machining accuracy, or a local special shape introduced due to a local design requirement, and the like. In all, the first enclosure 2110 is generally flat.

The second enclosure 2120 is recessed at a predetermined position away from the first enclosure 2110 to form the multiple accommodating grooves 2121. A shape of each accommodating groove 2121 matches the corresponding electrode assembly 220.

Peripheral sides of the first enclosure 2110 and the second enclosure 2120 are respectively provided an edge sealing portion. The peripheral sides of the first enclosure 2110 and the second enclosure 2120 is sealed and connected through the edge sealing portion, so that the electrode assembly 220 and the flexible circuit 230 are packaged in the enclosure 210. An outer side of the output terminal 2303 is covered with a sealing adhesive layer (not shown in the figure). The output terminal 2303 extends out of the housing 210 between the two edge sealing portions; and the output terminal 2303 is sealed and connected with a corresponding position of the edge sealing portion through the sealing adhesive layer for leading out power of the battery 20.

The lead-out portion 2201 of the electrode assembly 220 and the flexible circuit 230 are arranged close to the first enclosure 2110. Neat wiring can be formed by using the flat first enclosure 2110, and late stress deformation can be avoided as much as possible.

In the description of this specification, the description of the reference terms such as "an embodiment", "some embodiments", "exemplary embodiments", "example", "specific example", or "some examples" means that the specific features, structures, materials, or characteristics described with reference to the embodiment or example are included in at least one embodiment or example of the present disclosure. In the present disclosure, exemplary descriptions of the foregoing terms do not necessarily refer to the same embodiment or example.

Although the embodiments of the present disclosure have been shown and described, a person of ordinary skill in the art should understand that various changes, modifications, replacements, and variations may be made to the embodiments without departing from the principles and spirit of the present disclosure, and the scope of the present disclosure is as defined by the appended claims and their equivalents.

## Claims

1. A battery, applicable to an electronic device, wherein the electronic device comprises an enclosure having an accommodating space formed therein and a plurality of functional devices; the plurality of functional devices are accommodated in the enclosure and occupy part of the accommodating space of the enclosure; and the battery comprising:
a plurality of electrode assemblies, respectively arranged in a predetermined size specification and arranged at predetermined positions to substantially occupy the rest of the accommodating space, wherein each of the predetermined positions of the electrode assemblies is provided with a lead-out portion;
a housing, having a predetermined position protruding outward and forming inside a plurality of accommodating grooves correspondingly; and the plurality of accommodating grooves matching the overall dimensions of the plurality of electrode assemblies to correspondingly accommodate the plurality of electrode assemblies; and
a flexible circuit, integrally formed with the housing and laid based on a predetermined serial/parallel relationship of the plurality of electrode assemblies and a position of the lead-out portion, the flexible circuit comprising an output terminal and a plurality of connecting portions; the plurality of connecting portions being configured to be connected with the corresponding lead-out portions to electrically connect the plurality of electrode assemblies; and the output terminal extending out of the housing for leading out power.

2. The battery according to claim 1, wherein the flexible circuit further comprises a wire portion; the wire section is integrally formed on an inner side of the housing;
the plurality of connecting portions and the output terminal are arranged on the wire portion; and the connecting portions protrude from an inner side of the enclosure and extend to the corresponding lead-out portions.

3. The battery according to claim 1 or 2, wherein the housing comprises:
a first enclosure, substantially located on a same plane; and
a second enclosure, arranged opposite to the first enclosure and defining the accommodating space together with the first enclosure, wherein the predetermined position of the second enclosure is recessed away from the first enclosure to form the plurality of accommodating grooves; and
the flexible circuit is attached to an inner wall of the first enclosure.

4. The battery according to any of claims 1 to 3, wherein the housing comprises:
a first enclosure, substantially located on a same plane; and
a second enclosure, arranged opposite to the first enclosure and defining the accommodating space together with the first enclosure, wherein the predetermined position of the second enclosure is recessed away from the first enclosure to form the plurality of accommodating grooves; and
the flexible circuit is attached to an inner wall of the second enclosure and arranged in a non-drawing area of the second enclosure.

5. The battery according to any of claims 1 to 4, wherein the flexible circuit comprises:
a flexible circuit layer, attached to an inner wall of the housing and comprising the wire portion, the connecting portion, and the output terminal; and
an insulating layer, covering an outer side of the flexible circuit layer and exposing the connecting portion and the output terminal.

6. The battery according to claim 5, wherein the flexible circuit layer comprises a plurality of wire sections; the plurality of wire sections are predetermined based on the predetermined serial/parallel relationship and positions of the lead-out portion and the output terminal;
at least one of the connecting portion and the output terminal is integrally preformed with one of the wire sections; and
the insulating layer covers the plurality of wire sections.

7. The battery according to claim 6, wherein the insulating layer is formed by coating an insulating material on a surface of the wire section.

8. The battery according to claim 7, wherein each of the electrode assemblies comprises a plurality of positive plates, a plurality of separators, and a plurality of negative plates that are arranged in a stack; each of the positive plates is provided with a positive tab; each of the negative plates is provided with a negative tab;
a plurality of positive tabs of each electrode assembly are connected together to form a positive lead-out portion; a plurality of negative tabs are connected together to form a negative lead-out portion; and
the connecting portion protrudes from the wire section and extends to a position docked with the corresponding positive lead-out portion or the negative lead-out portion.

9. The battery according to any of claims 6 to 8, wherein the insulating layer is an insulating film; and the insulating film is attached to the outer side of the flexible circuit layer and engaged with the housing.

10. An electronic device, comprising
an enclosure, having an accommodating space formed therein; and
a plurality of functional devices, mounted to the enclosure and occupying part of the accommodating space,
wherein the electronic device further comprises the battery according to any of claims 1 to 9; and
the battery substantially occupies the rest of the accommodating space.
